# EUROPEAN PATENT APPLICATION

(11) **EP 4 198 852 A1**
(43) Date of publication of application: **21.06.2023**
(21) Application number: 21215255.7
(22) Date of filing: 16.12.2021
(51) Int. Cl.: G06Q 10/06

(54) **RISK ASSESSMENT IN AN ENVIRONMENT**

(71) Applicant: Cognitechs SA, 1228 Plan-les-Ouates (CH)
(72) Inventor: Rosset, Gilles, 1228 Plan-les-Ouates (CH)
(74) Representative: KATZAROV S.A.

(57) **Abstract**

The present relates to a system for assessing a risk in an environment comprising a plurality of entities and a risk computing engine for computing the risk.

The data of each entity is provisioned in a knowledge module configured for acquiring the data of the entities and converting said data into a graph.

The risk computing engine comprises a graph merge tool for merging the graphs generated by the knowledge module into a semantic graph, and a rule engine for establishing the rules to be followed in the semantic graph, and an event module for monitoring all events generated by the graph merge tool.

If at least one rule is challenged, the event module is configured for instructing the rule engine to apply the consequence associated to said rule in the semantic graph.

## Description

### Technical Field

The present invention relates to a system for assessing a risk in an environment. The present invention further concerns a computer implemented method for assessing a risk in an environment.

### Background of the art

In a modern society, the role of a risk manager is of outmost importance, whether regarding technological, human, operational, cyber or any other business risk. It leaves almost no room for error or approximation and can also be repetitive. Risk assessment or management is based on logic, but it also requires on one hand a synthetic vision to take part in strategic issues and on the other hand the capacity to operate at a tactical and much more concrete level.

However, even without errors of appreciation and with all the best willingness, a risk manager today is not able to see and anticipate everything. In particular, several factors regularly defeat any risk management team:
- firstly, unexpected consequences of known and validated changes or actions, and in general all cascading cause and effect relationships;
- secondly, emergencies and unforeseen events for which some changes or actions do not always go through all the necessary verification steps;
- thirdly, human errors when executing a change or an action that had been validated.

This state of affairs is confirmed on a regular basis by the significant number of irregularities or "problems" reported during independent reviews namely an audit, an assessment or a penetration test type.

As it would be utopian or unrealistic to try to completely eliminate these factors, the solution generally applied to reduce risk is to increase governance, add controls, increase the redundancy of resources or teams and the frequency of reviews.

Unfortunately, one must admit that this strategy involves significant costs. Moreover, this "rigidification" of the framework is often contradictory to the flexibility and reactivity that anyone would like to see increasing in a competitive world.

Therefore, there is a need to provide an alternative to the exiting risk assessment technics to overcome their drawbacks.

### Summary of the invention

The above problems are solved, or at least minimized, by the present invention.

In a first aspect, the invention concerns a system for assessing a risk in an environment,
the environment comprising a plurality of data sources, each data source hosting data related to said environment and used to assess the risk,
the system comprising a risk computing engine for computing the risk based on the data hosted in data sources,
the system being characterized in that
the data of each data source is provisioned in a knowledge module, the knowledge module being configured for acquiring the data of the data sources and converting said data into a graph,
the risk computing engine further comprising
a graph merge tool for merging the graphs generated by the knowledge module into a semantic graph, the graph merge tool being further configured for updating the semantic graph to implement a change and generating an event for every change implemented in the semantic graph, and
a rule engine for establishing the rules to be followed in the semantic graph so as to maintain the risk in the environment at a predetermined level, each rule defining provisions that are associated to a consequence to be applied to the semantic graph if the provisions of the rule are fulfilled; and
an event module for monitoring all events generated by the graph merge tool, the event module being further configured for determining if the change implemented in the updated semantic graph challenges said rules established by the rule engine,
so that if at least one rule is challenged, the event module is configured for instructing the rule engine to apply the consequence associated to said rule in the semantic graph.

In another aspect, the invention concerns a method, in particular a computer implemented method, for assessing a risk in an environment, the environment comprising a plurality of data sources, each data source hosting data related to said environment and used to assess the risk, the method being configured for computing a risk based on the data hosted in data sources,
the method comprising
provisioning the data of each data source in a knowledge module, the knowledge module being configured for acquiring the data of the data sources and converting said data into a graph, and
merging the graphs generated by the knowledge module into a semantic graph, and
updating the semantic graph to implement a change and generating an event for every change implemented in the semantic graph, and
establishing the rules to be followed in the semantic graph so as to maintain the risk in the environment at a predetermined level, each rule defining provisions that are associated to a consequence to be applied to the semantic graph if the provisions of the rule are fulfilled, and
monitoring all the generated events, and
determining if the change implemented in the updated semantic graph challenges said established rules, and
applying the consequence associated to said rule in the semantic graph if at least one rule is challenged.

In another aspect, the invention relates to a computer program comprising instructions which, when the program is executed by a computer, cause the computer to carry out the method according to the present invention.

In another aspect, the invention relates to an apparatus comprising means for carrying out the method of according to the present invention.

### Description of the invention

The invention concerns a system for assessing a risk in an environment, the environment comprising a plurality of data sources, each data source hosting data related to said environment and used to assess the risk,
the system comprising a risk computing engine for computing the risk based on the data hosted in data sources,
the system being characterized in that
the data of each data source is provisioned in a knowledge module, the knowledge module being configured for acquiring the data of the data sources and converting said data into a graph,
the risk computing engine further comprising
a graph merge tool for merging the graphs generated by the knowledge module into a semantic graph, the graph merge tool being further configured for updating the semantic graph to implement a change and generating an event for every change implemented in the semantic graph, and
a rule engine for establishing the rules to be followed in the semantic graph so as to maintain the risk in the environment at a predetermined level, each rule defining provisions that are associated to a consequence to be applied to the semantic graph if the provisions of the rule are fulfilled; and
an event module for monitoring all events generated by the graph merge tool, the event module being further configured for determining if the change implemented in the updated semantic graph challenges said rules established by the rule engine,
so that if at least one rule is challenged, the event module is configured for instructing the rule engine to apply the consequence associated to said rule in the semantic graph.

The present invention is advantageously an adaptable solution that can be applied to numerous domains to asses a risk since the system can be adapted to a specific domain as long as one provides for instance the rules to be applied, the data sources to be used, and the type of nodes (called "entities", e.g. people, computers, contracts, drugs, vulnerabilities, etc.) and relations (e.g. "has access to", "is part of", "belongs to", etc.) represented in the knowledge graph.

The risk to be assessed depends on the domain. For instance, in cybersecurity, the present invention is applied to maintain manage a risk of intrusion in an environment (see example 1 below). In health/medical environment, the present invention is used to assess the risk of medical error as a result of improper medication of a patient (see example 2 below). In fraud management, the present invention is used to ensure that at any time, users do not have toxic combinations of entitlements, and the principles of "need-to-know" are continuously applied. However the invention is not limited to the above mentioned example.

The present invention allows to maintain the risk in the environment at a predetermined level. The level of risk set by the user depends on the domain where the system is implemented. The level of risk is for instance determined by the rules established by a user. Those rules can be applied universally (i.e. to the whole semantic graph) or only to a subset of the semantic graph. Those rules can include modifiable thresholds, so that the risk appetite can be fined tuned without the need of any coding, directly by the risk management teams.

In a preferred embodiment, when the application of the consequence is considered as a change generating an event which induces an update of the semantic graph, the event module is further configured for determining if the change implemented in the updated semantic challenges said rules established by the rule engine, so that the risk is assessed in a continuous manner. Thus, the system assesses the risk continuously, the application of a consequence triggers the generation of subsequent event, and there is a need to verify if this subsequent event challenges the rules. In other words, the event module and the rule engine (or the actions these elements) are repeated, for instance in cycle manner, to ensure that the semantic graph meets the provisions of the established rules. Preferably, the continuous risk assessment (i.e. cycle) is running until no more changes are made to the semantic graph or no more rule is challenged by the last events.

Preferably, the change implemented in the semantic graph is chosen from:
- a change in at least an element of the data hosted by the data source and converted into a graph, for instance a new relation between two nodes or one or more new nodes; or the change of a particular property of a node;
- an application of an established rule inducing a change in the semantic graph;
- a change in the probability of any risk scenario projected on the semantic graph;
- a new source of data configured in the knowledge module, or a source of data removed;

Preferably the consequence associated to one rule being chosen among the list comprising tagging nodes and/or relations in the semantic graph, untagging nodes and/or relations in the semantic graph, creating or updating or deleting nodes or relations in the semantic graph, or storing the possibility of occurrence of a risk scenario.

Advantageously, the present invention allows to process the available data from the various data sources (or external sources) in a continuous and dynamic manner to detect any change or event to provide an appropriate and adjusted feedback. The point is to detect any changes in the data hosted by the data source at an early state and to incorporate this event in the risk computing engine to evaluate the impact of said event.

In the present invention, the data from the data sources used to assess the risk are provisioned in a graph. The graph comprises a plurality of nodes or entities connected one another. This allows a strong contextualization of every data, with all related data easily accessible in the most performant manner. The "semantic graph" representation also has the benefit to be closer to the business by getting rid of the technical implementation details of every data source, further simplifying the establishment of rules.

The knowledge module is connected with all the data sources so that the data of each data source is provisioned in a knowledge module. Therefore, the knowledge module is capable of detecting any data change or event in the data hosted in a data source. The knowledge module is further configured for acquiring the data of the data sources and converting said data into a graph.

In a preferred embodiment, the knowledge module is a set of connectors capable of reading/interpreting/connecting to data sources, such as external data sources, of many different formats for instance, local or remote files, third-party services, databases or directories. This data can then be manipulated, transformed, merged or separated.

Preferably, the knowledge module can convert or transform the data hosted in data source (typically, a line from an Excel file) into a graph, which will then be merged with the semantic graph. For instance, this conversion is defined visually in the user interface: the user draws the desired graph and indicates where and how each piece of information loaded from the data source should be stored in entities and relations.

Preferably, the data sources of the environment are chosen among files, databases, directories, remote systems calls, data pushed by another system.

The graph merge tool is configured for merging the graphs generated by the knowledge module into a semantic graph. For instance, the graph merge tool is a graph fusion algorithm.

In the present invention, the semantic graph is composed of interconnected entities or nodes. Preferably, the types of nodes and the relation between two nodes have been previously entered in the dictionary module (types dictionary), for instance servers, network nodes, vulnerabilities, services or ports.

In a preferred embodiment, the graph merge tool is responsible for taking as input a reference graph and an imported graph. From these two graphs, the graph merge tool can perform the following operations (namely one or a combinations of these operations):
- the graph merge tool can make the reference graph evolve in a consistent way by taking into account the data of the imported graph, for instance by using the constraints defined in the dictionary module, it identifies the common entities and relations in the two graphs and merges all their data;
- the graph merge tool can take into account the probability of each imported entity or relation: a less probable data will not be imported
- the graph merge tool can apply its own merging rules for each property of an entity (do we keep the last value? the highest, the lowest?)
- the graph merge tool can identify elements of the reference graph that have disappeared in the new imported data, and eventually, it removes them completely from the reference graph if they are no longer known by any data source
- And finally, the graph merge tool can generate events for each change (for example, an entity has been created or deleted, a property of an entity has been modified, a "tag" has been applied to an entity or a relationship, etc). These events can then be sent to the event module, as this could lead to recalculate rules.

The rule engine, also named assertions engine or intelligence engine, is configured for establishing the rules to be maintained in the semantic graph. The rule engine allows to define assertions or rules, for instance in pairs [conditions; consequences] that must always be maintained, whatever the changes or event made to the semantic graph. The consequences are thus applied or "applied in reverse" in the case where conditions are no longer true.

Preferably, an assertion or rule is composed of criteria or provision allowing to identify one or more entity (for instance nodes or specific entities or relations in the semantic graph), to test one or more conditions with respect to them, and to establish a list of actions that must be performed when a set of entity and/or relations meets all the necessary conditions.

For example, these actions can be, in particular (non-exhaustive list):
- To modify the semantic graph, by adding entities or relations or nodes, by completing or modifying properties of the entities in question, or by deleting elements;
- Apply a tag to any of the subjects or entities - a tag that could be reused in another assertion typically;
- Identify the possibility that a scenario may occur, which is then used by the imagination engine;

In a preferred embodiment, the result of the execution of an assertion, following the application of these actions, is a semantic graph of reduced size, just like when loading an entity (a data source). It is a copy of the data of the semantic graph, with the modifications that were made by means of the actions. This graph will be sent to the graph merge tool in order to be merged with the semantic graph, generating in its turn events which can potentially, via the event module trigger the evaluation of other assertions or rules.

The event module or event orchestrator is configured for monitoring any event resulting from a change in data hosted in or from the data sources.

Each change of source data detected by the knowledge module generates a new graph which is merged into an updated semantic graph by the graph merge tool, the event module being configured for assessing the updated semantic graph with respect to the risk rules established by the rules engine.

The event module allows to list everything that must be recalculated according to events that have occurred in the semantic graph. Advantageously, the event module triggers these calculations in an orderly, relevant and optimized way.

In a preferred embodiment, upon any event generated as a result of merging new data into the semantic graph, the event module can (non exhaustive list):
- Survey the set of active assertions/rules, and check if their evaluation or outcome could be affected by the event in question; If so, the event module will also decide if a global reevaluation of the assertion/rule is necessary (on the whole semantic graph), or if a local reevaluation is sufficient (i.e. a reevaluation targeted on the part of the graph that has been modified).
- Update the different caches used to speed up all the processings, from queries to constraints applications;
- Update the global statistics within the system used by the analytics engine;
- connect to the notification engine, which allows to inform the user or another system according to the conditions previously defined;

Preferably, the risk computing engine further comprises a dictionary module storing parameters related to a determined environment, said dictionary module comprising at least one of the parameters chosen from the list comprising the definition of the nodes of a graph, the connections between the nodes, the properties of each node, the tags associated with the nodes, the factors associated with the nodes, the metadata associated with the nodes.

A tag with the nodes or relations can be defined as a named indicator, that is present or not - thus it has a boolean meaning.

A factor with the nodes can be defined as a numeric value, that is either calculated by using an expression using the properties or other factors of the node, or results in the composition of the probability of occurrence of risk scenarios.

Metadata with the nodes or relations can be defined as unstructured, supplementary information that can be attached to elements of the graph, as a compliment or details - but that normally do not directly participate in the risk analysis.

Advantageously, the dictionary module defines all the types of "entities" handled, their relations, their intrinsic properties, their constraints (what makes them unique?), and to what extent these types are specializations of each other (traditional notion of inheritance).

Preferably, the dictionary module is configured depending on the environment. The setting and the content of the dictionary module are adjusted depending on the environment.

Preferably, the dictionary is the basic repository on which all the elements of risk computing engine are based. For instance the graph query engine, the graph merge engine, or the rule engine use the dictionary to optimize searches, to learn how to integrate new data in the semantic graph, or to browse the graph.

Preferably, the risk computing engine further comprises an imagination engine connected to the risk rule engine, said imagination engine using the semantic graph as input to discover possible scenarios and project their probability to evaluate the impact of said scenarios on every node by compiling them.

Advantageously, the function of the imagination engine is to combine the possible scenarios discovered by the rule engine (or assertions engine) on two aspects (non-exhaustive list).

In a first aspect, the imagination engine can combine the risk impact of the different scenarios identified, for each entity of the semantic graph. For each impact, the risk computing engine allows to configure a temporal and quantitative combination function. To illustrate those combination functions, let us imagine that we want to measure the risk of having a failure in an assembly line composed of multiple machines, every machine being composed of various components. For every machine, the temporal probability of failure gets higher if the machine is composed of a high number of components, because at every point in time, there are more components that could fail. But the quantitative impact does not depend on the number of components: if one, or all components fail, the result is the same: the assembly line gets stopped.

For example, in the context of weighing the risks of an insurance policy for a building, we could define a scenario of the following form "A flood is triggered and causes a water damage in the building." In this example, the risk engine would record that this scenario can occur every time there is a water point in the building (bathroom, kitchen, etc.).

The role of the imagination engine is to cumulate these scenarios in terms of temporal and absolute probability, in order to calculate an overall risk. In this example, the owner of a 6-room, 2-bathroom apartment would have a higher temporal probability of the scenario occurring than the owner of a studio apartment, but the sum of damage per event would not necessarily be higher.

In a second aspect, the imagination engine can recognize that several simple scenarios put together because they have elements in common, can represent a so-called composite scenario. This composite scenario would generally have a higher impact in terms of risk.

For example, if one identifies the following possible scenarios that could be part of a restaurant's risk management:
- A person has a peanut allergy (Medium-low probability, high risk)
- The restaurant forgot to mention on the menu that the dish contains peanuts (Medium probability, low risk)

The function of the IMAGINATION engine is to put these two scenarios together if person P is equal to customer C, and thus deduce the following composite scenario:
- "Following a meal at a restaurant, a person goes into allergic shock" whose probability is equal to the composite probability of the two previous scenarios, and the risk could be much greater, or of another category (e.g. reputational risk).

The imagination engine is thus invoked in reaction to events (appearance or disappearance of possible scenarios) sent by the events module, then it refreshes the risk scores and updates the possibility of composite scenarios, and in turn generates events.

Preferably, the risk computing engine further comprises a simulation engine configured for simulating the effect of change on the semantic graph.

The simulation engine allows to evaluate the impact of one or several changes or events in the semantic graph. As input, the simulation engine takes a set of parameters allowing to isolate a part of the semantic graph, and a list of actions to perform on said part of semantic graph (create/delete/modify entities or relations, typically).

In a preferred embodiment, using these elements, the simulation engine first invokes the graph queries engine to extract the relevant graph for the simulation, then the events module and the rule engine, in a repetitive way, to simulate all the chains of causes and consequences until the situation is stabilized (stabilization occurs when no more assertions need to be evaluated).

Finally, the simulation engine compares the initial graph (just after the application of the actions to be simulated), with the final graph, and generates a list of events describing the modifications that resulted from the simulation.

Preferably, the risk computing engine further comprises an analytics engine configured for navigating into the semantic graph and calculating statistics with respect to said semantic graph, for instance the correlation between nodes of said semantic graph, or the distribution of certain properties values among all the nodes in the graph. This allows the automatic discovery of outliers and anomalies within the imported data. Outliers are nodes that statistically differ from the other elements in the semantic graph, and that can be of a certain interest in a risk analysis (single points of failure, highly exposed components, etc). Anomalies could also be an indication that the original data sources have discrepancies, and underline data quality issues.

Preferably, the risk computing engine further comprises a graph queries engine navigating in the semantic graph for searching and loading data in the semantic graph.

Preferably, the risk engine further comprises a notification module to notify a user of an event or forwarding the event to another system, or logging the event, or executing an action such as calling a third-party program.

Preferably, the system comprises hardware component configured for executing the function performed by each module or tool or engine or element of the system, namely the steps of the method, in particular the computer implemented method, according to the present invention. For instance the hardware element are chosen from the list comprising one or more CPUs, RAM for in-memory computing, storage drives for data persistence, and a network access device for connection to the network and/or Internet.

The invention further relates to a method, in particular a computer implemented method, for assessing a risk in an environment, the environment comprising a plurality of data sources, each data source hosting data related to said environment and used to assess the risk, the method being configured for computing a risk based on the data hosted in data sources,
the method comprising
provisioning the data of each data source in a knowledge module, the knowledge module being configured for acquiring the data of the data sources and converting said data into a graph, and
merging the graphs generated by the knowledge module into a semantic graph, and
updating the semantic graph to implement a change and generating an event for every change implemented in the semantic graph, and
establishing the rules to be followed in the semantic graph so as to maintain the risk in the environment at a predetermined level, each rule defining provisions that are associated to a consequence to be applied to the semantic graph if the provisions of the rule are fulfilled, and
monitoring all the generated events, and
determining if the change implemented in the updated semantic graph challenges said established rules, and
applying the consequence associated to said rule in the semantic graph if at least one rule is challenged.

Preferably, when the application of the consequence is considered as a change generating an event which induces an update of the semantic graph, the method further comprises a step of
determining if the change implemented in the updated semantic challenges said rules established by the rule engine, so that the risk is assessed in a continuous manner.

The particular advantages of the method are similar to the ones of the system of the invention and will thus not be repeated here.

As used herein, the word "means" (singular or plural) preceded or followed by a function can be replaced by the word "unit" or " module". For instance "computation means" can be replaced by "computation module" or "computation unit".

The embodiments describe for the system also apply to the methods according to the present invention mutatis mutandis.

### Brief description of the drawings

Further particular advantages and features of the invention will become more apparent from the following non-limitative description of at least one embodiment of the invention which will refer to the accompanying drawings, wherein
- Figure 1 represents an example of a system according to the present invention;
- Figure 2 represents an example of a system according to the present invention in cybersecurity;
- Figure 3 represents an example of a system according to the present invention in health/medical environment;

### Detailed description of the invention

The present detailed description is intended to illustrate the invention in a non-limitative manner since any feature of an embodiment may be combined with any other feature of a different embodiment in an advantageous manner.

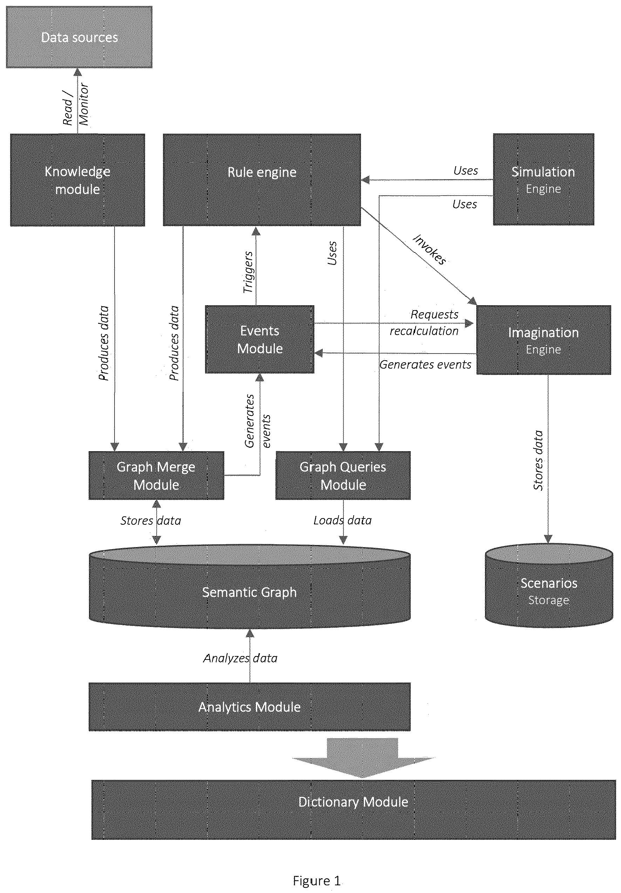

Figure 1 represents a general overview of the architecture of system for assessing a risk in an environment.

The architecture represented on figure 1 is modular and generic, meaning that the system can apply to various environments.

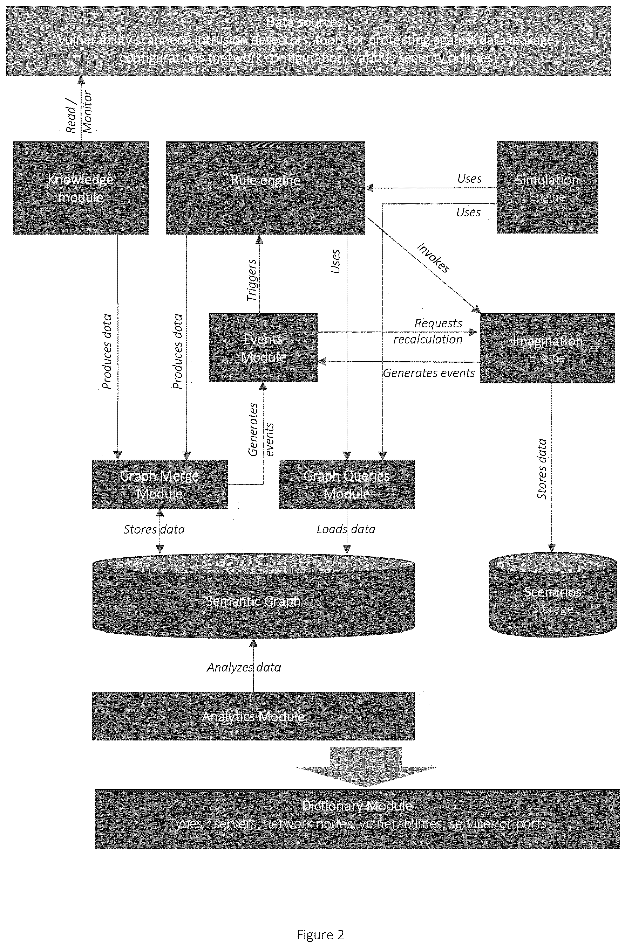

Figure 2 represents an example of application 1 where the system according to the present invention is applied to manage a risk of intrusion or cybersecurity.

The management of cybersecurity risks is now a major challenge for companies, regardless of their field of activity, size or maturity. In an increasingly digital world, the equilibrium is increasingly unbalanced between the effort that may be required to carry out a cyber attack, and the technological, logistical and human resources that must be deployed to protect against it.

Under this growing pressure, cybersecurity teams now often find themselves equipped with a growing arsenal of detection and monitoring tools, but must then use a sharp analytical mind to be able to put into perspective all the results and alerts they receive. Moreover, since this analysis is done at a given moment, it is not necessarily valid at the next moment because the conditions may have changed.

The present invention aims to address this issue by constantly revalidating its analyses whenever the observed system changes. The criticality of the problems and the probabilities of occurrence of risk scenarios are continuously updated and enable the risk manager to prioritize his actions, and no longer find himself caught short by the unforeseen effect that any change may have on the company's risk posture.

In the present example, the data sources connected to the knowledge module comprise various security tools such as vulnerability scanners, intrusion detectors, tools for protecting against data leakage, etc. Relevant configurations (network configuration, various security policies), and even the repositories available in the company (CMDB, LDAP directory, etc.) are then added to the knowledge module to build a semantic graph that is always kept up to date.

This semantic graph is composed of interconnected entities or nodes whose types would have been previously entered in the dictionary module (types dictionary), for instance servers, network nodes, vulnerabilities, services or ports.

One then defines rules or assertions that allow to detect situations that we never want to be possible in the system, in other words, situations that are above the predetermined level of risk set, for instance a level of risk fixed by a risk manager of a company.

For example: a severe vulnerability affecting a service that can be reached from the Internet. The rule engine (i.e. intelligence engine) that will have the role of ensuring that, whatever the change (i.e. event) in the system, this particular condition is never detected. For instance, when a vulnerability appeared, this condition was not fulfilled, and as a result, following the analysis of the cybersecurity team, its treatment was not considered urgent. Then after a few days, a change occurs in the system - a network change, or a completely independent system configuration change. This change, captured by the knowledge module and integrated into the semantic graph through the graph merge tool, will generate events transmitted to the events module.

The events module will conclude that the change is such as to change the result of the analysis of our rule (i.e. here the established rule) prohibiting the exposure of a vulnerability to the Internet (i.e. here the provision), and will invoke the rule engine in order to verify that the change has not led to a new violation (or the resolution of a violation). This engine, through the graph queries engine, will follow the nodes of the semantic graph and arrive at a result, for instance a new violation. This violation will be integrated into the semantic graph (i.e. here the consequence), still through the graph merge tool, giving rise once again to events sent to the events module, the events which may themselves be the source of other verifications.

The simulation engine can also be integrated into the company's system, for example within a change management workflow. Let's take the example of its use to validate requests for network configuration changes (e.g. opening of firewalls). By calling the Simulation engine via its API and providing it with the projected change as input, it could extract the relevant part of the knowledge graph via the graph queries engine, invoke the events module with the events generated by the simulated change, which would enter its evaluation loop as in the previous example, until the situation stabilizes. Once the situation is stable, the simulation engine could then respond to the workflow engine with the impacts of the projected change, which could then be used to condition additional validations, or even automatically prohibit the change.

Finally, still based on the updated semantic graph, the Imagination engine could be configured to define short attack scenarios, which could be chained to each other. In cybersecurity, an intrusion is rarely limited to a single operation. We often speak of a cycle made up of several "simple" steps that follow one another, until the attacked system is completely compromised: reconnaissance (discovery of the accessible environment and its possible flaws), exploitation of a vulnerability, perpetuation of the presence on the vulnerable system by giving oneself the means to come back to it, lateral movement (which is a new occurrence of this cycle), and eventually erasing one's traces to avoid being detected.

It is relatively simple to describe these basic scenarios and then automatically detect where they might occur. What is particularly interesting is their accumulation, which allows to statistically discover the most "key" points for the global security of the system. This is the role of the imagination engine. To return to our previous example of a configuration change, the latter could also trigger the evaluation of a rule in the rule engine that has the effect of discovering new possibilities for a scenario to occur (for example, the opening of a firewall could have the effect of making a recognition scenario simpler, or facilitating a lateral movement). These new scenarios would then be passed to the imagination engine, which would seek to combine them with existing known scenarios. If new possible combinations are detected, events are generated for the events module, leading again to an evaluation loop if necessary, but also updating wherever required the probabilities of occurrence of the various scenarios known to it.

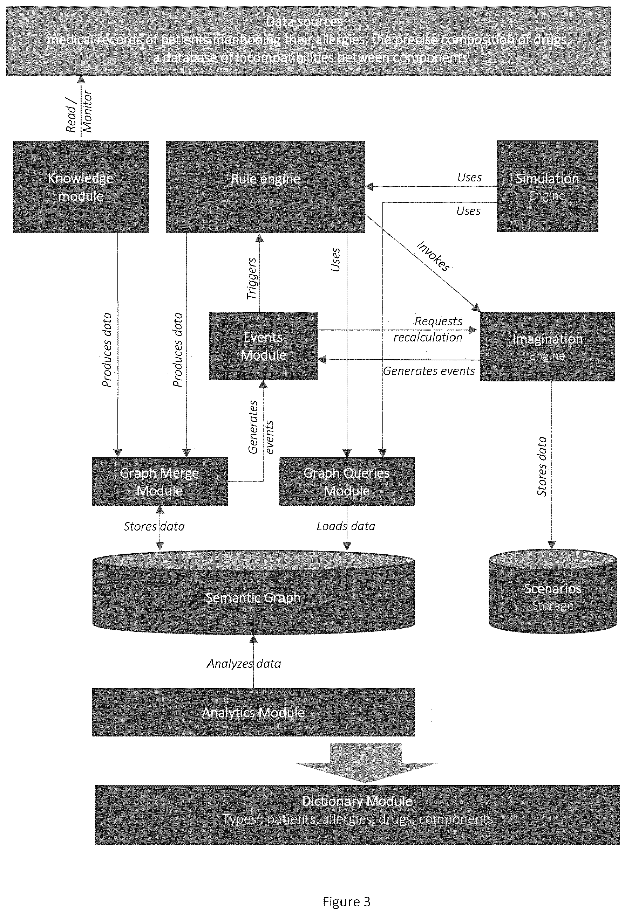

Figure 3 represents an example of application 2 where the system according to the present invention is applied to manage a risk of medical error.

The point is here to assess the risk of medical error as a result of improper medication of a patient - either because the patient is allergic to one of the components of a drug administered to him or her, or because two drug components have a harmful effect when combined.

Today, it is the medical staff that has the full responsibility to know these elements, and to anticipate problems before they occur. This requires every professional in the field to have an extensive knowledge of the various drugs, to follow the medical literature, to pay close attention to the patients and to carefully review their medical records before taking any action. The growing number of elements to be taken into account, and the increasing pressure on the medical profession due to various factors, in particular staff shortages, can only have a negative effect on the overall risk for patients.

To address the medical error issue, the point is to provision a semantic graph based on other types filled in the types dictionary of the dictionary module for instance patients, allergies, drugs, components. The construction of this graph would be done by connecting to various data sources, in particular the medical records of patients mentioning their allergies, the precise composition of drugs, and a database of incompatibilities between components. These data continuously monitored by the knowledge module, would allow the semantic graph to be maintained through the graph merge tool.

The rule engine could then be used to detect any presence in the semantic graph of an incompatibility (here the established rules)- between drug components, or between a component and a particular allergy (i.e. here the provisions). It is possible to detect such a situation by browsing the semantic graph, starting from each patient, and to review the drugs administered to the patient.

For instance, in the present example there is incompatibility detected initially. Each new administration of medication (i.e. here change) to a patient is recorded in the patient's file, and therefore causes a change in the data of the data source, captured by the knowledge module, imported into the graph through the graph merge tool, and consequently generating events sent to the events module.

The events module would then invoke the rule engine in response so that it re-evaluates the relevant rules. Typically, if the change is trivial, for instance an irrelevant data change, perhaps there would be no effect. But if it is a new drug, a change in dosage, some of the rules might need to be re-evaluated. For instance, the new drug is incompatible with another drug administered to the patient so that there is a medical error. A rule would trigger an event that could be picked up by the notification engine (i.e. here the consequence), resulting in an alert for the medical profession to rectify the situation, in the best case saving a life.

But frequently in the medical and biological field in particular, risks are not binary. For instance, a component can increase a particular risk (thrombosis, stroke, etc). This data could therefore also be integrated into the rule engine, so that it generates possible scenarios in the imagination engine when certain conditions are met. By stacking these scenarios, it would become much simpler to detect complex cases, where several factors may jointly promote a negative effect, but where each factor taken individually is relatively negligible.

In this example, the detection of a problem is already a real plus, but unfortunately it can still be too late, which is why the use of the simulation engine would be much more interesting here: by integrating the present invention with the hospital management system, we could check, before administering a drug, the compatibility of this one with the set of known rules and the particular profile of the patient. We would therefore provide as input to the engine the patient's identifier and the drug to be added (or the dosage to be adjusted), then the system would use the graph queries engine to extract the significant part of the graph concerning the patient, would apply the simulated change via the graph merge tool, triggering events captured by the events module, itself invoking the intelligence engine in order to re-evaluate the relevant rules in the context of the change, and possibly generating a new loop of events until the situation is stabilized. at the output, the simulation engine could therefore answer whether the administration of the drug poses an incompatibility problem or not and whether it would significantly increase a particular risk for the patient.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

## Claims

1. System for assessing a risk in an environment,
the environment comprising a plurality of data sources, each data source hosting data related to said environment and used to assess the risk,
the system comprising a risk computing engine for computing the risk based on the data hosted in data sources,
the system being **characterized in that**
the data of each data source is provisioned in a knowledge module, the knowledge module being configured for acquiring the data of the data sources and converting said data into a graph,
the risk computing engine further comprising
a graph merge tool for merging the graphs generated by the knowledge module into a semantic graph, the graph merge tool being further configured for updating the semantic graph to implement a change and generating an event for every change implemented in the semantic graph, and
a rule engine for establishing the rules to be followed in the semantic graph so as to maintain the risk in the environment at a predetermined level, each rule defining provisions that are associated to a consequence to be applied to the semantic graph if the provisions of the rule are fulfilled; and
an event module for monitoring all events generated by the graph merge tool, the event module being further configured for determining if the change implemented in the updated semantic graph challenges said rules established by the rule engine,
so that if at least one rule is challenged, the event module is configured for instructing the rule engine to apply the consequence associated to said rule in the semantic graph.

2. System according to claim 1, wherein when the application of the consequence is considered as a change generating an event which induces an update of the semantic graph, the event module is further configured for determining if the change implemented in the updated semantic challenges said rules established by the rule engine, so that the risk is assessed in a continuous manner.

3. System according to any one of claims 1 or 2, wherein the change implemented in the semantic graph is chosen from:
- a change in at least an element of the data hosted by the data source and converted into a graph, for instance a new relation between two nodes or one or more new nodes, or the change of a particular property of a node;
- an application of an established rule inducing a change in the semantic graph;
- a change in the probability of any risk scenario projected on the semantic graph;
- a new source of data configured in the knowledge module, or a source of data removed.

4. System according to any one of claims 1 to 3, wherein the consequence associated to one rule being chosen among the list comprising tagging nodes and/or relations in the semantic graph, untagging nodes and/or relations in the semantic graph creating or updating or deleting nodes in the semantic graph, or storing the possibility of occurrence of a risk scenario.

5. System according to any one of claims 1 to 4, wherein the risk computing engine further comprises a dictionary module storing parameters related to a determined environment, said dictionary module comprising at least one of the parameters chosen from the list comprising the definition of the nodes of a graph, the connections between the nodes, type of data characterizing each node, the tags associated with the nodes, the factors associated with the nodes, the metadata associated with the nodes.

6. System according to any one of claims 1 to 5, wherein the data sources of the environment are chosen among files, databases, directories, remote systems calls, data pushed by another system.

7. System according to any one of claims 1 to 6, wherein the risk computing engine further comprises an imagination engine connected to the risk rule engine, said imagination engine using the semantic graph as input to discover possible scenarios and project their probability to evaluate the impact of said scenarios on every node by compiling them.

8. System according to any one of claims 1 to 7, wherein the risk computing engine further comprises a simulation engine configured for simulating the effect of change on the semantic graph.

9. System according to any one of claims 1 to 8, wherein the risk computing engine further comprises an analytics engine configured for navigating into the semantic graph and calculating statistics with respect to said semantic graph, for instance the correlation between nodes of said semantic graph, or the distribution of certain properties values among all the nodes in the graph.

10. System according to any one of claims 1 to 9, wherein the risk computing engine further comprises a graph queries engine navigating in the semantic graph for searching and loading data in the semantic graph.

11. System according to any one of claims 1 to 10, wherein the risk engine further comprises a notification module to notify a user of an event or forwarding the event to another system, or logging the event, or executing an action such as calling a third-party program.

12. Computer implemented method for assessing a risk in an environment, the environment comprising a plurality of data sources, each data source hosting data related to said environment and used to assess the risk, the method being configured for computing a risk based on the data hosted in data sources,
the method comprising
- provisioning the data of each data source in a knowledge module, the knowledge module being configured for acquiring the data of the data sources and converting said data into a graph, and
- merging the graphs generated by the knowledge module into a semantic graph, and
- updating the semantic graph to implement a change and generating an event for every change implemented in the semantic graph, and
- establishing the rules to be followed in the semantic graph so as to maintain the risk in the environment at a predetermined level, each rule defining provisions that are associated to a consequence to be applied to the semantic graph if the provisions of the rule are fulfilled, and
- monitoring all the generated events, and
- determining if the change implemented in the updated semantic graph challenges said established rules, and
- applying the consequence associated to said rule in the semantic graph if at least one rule is challenged.

13. Method according to claim 12, wherein when the application of the consequence is considered as a change generating an event which induces an update of the semantic graph, the method further comprises a step of
determining if the change implemented in the updated semantic challenges said rules established by the rule engine, so that the risk is assessed in a continuous manner.

14. A computer program comprising instructions which, when the program is executed by a computer, cause the computer to carry out the method according to any one of claims 12 to 13.

15. An apparatus comprising means for carrying out the method of according to any one of claims 12 to 13.
